# EUROPÄISCHE PATENTSCHRIFT

(11) **EP 3 510 262 B1**
(45) Veröffentlichungstag und Bekanntmachung des Hinweises auf die Patenterteilung: **10.03.2021**
(21) Anmeldenummer: 17761069.8
(22) Anmeldetag: 31.08.2017
(51) Int. Cl.: F01N 9/00, F01N 3/035, F01N 3/022, F01N 3/029

(54) **VERFAHREN ZUM BETREIBEN EINES ZUR AUSFILTERUNG VON IM ABGAS EINES OTTOMOTORS ENTHALTENEN PARTIKELN VORGESEHENEN OTTOPARTIKELFILTERS**
METHOD FOR OPERATING A GASOLINE PARTICLE FILTER FILTERING PARTICLES CONTAINED IN THE EXHAUST GAS OF A GASOLINE INTERNAL COMBUSTION ENGINE
PROCÉDÉ POUR COMMANDER UN FILTRE À PARTICULES D'ESSENCE FILTRANT DES PARTICULES CONTENUES DANS LES GAZ D'ÉCHAPPEMENT D'UN MOTEUR À ALLUMAGE COMMANDÉ

(30) Priorität: 12.09.2016 DE 102016217359
(43) Veröffentlichungstag der Anmeldung: 17.07.2019
(73) Patentinhaber: Volkswagen Aktiengesellschaft, 38440 Wolfsburg (DE)
(72) Erfinder: NOWAK, Daniel, 38259 Salzgitter (DE)
(86) Internationale Anmeldenummer: PCT/EP2017/071854
(87) Internationale Veröffentlichungsnummer: WO 2018/046383

(56) Entgegenhaltungen:
- DE-A1-102008 059 224
- DE-A1-102008 059 224
- US-A1- 2010 126 145
- US-A1- 2010 266 461
- US-A1- 2016 123 201

## Beschreibung

Die Erfindung betrifft ein Verfahren zum Betreiben eines Ottopartikelfilters zur Ausfilterung von im Abgas eines Ottomotors enthaltenen Partikeln, mit den Merkmalen des Oberbegriffs des Patentanspruchs 1.

Bislang sind zumeist Dieselpartikelfilter eingesetzt worden, die von Dieselmotoren emittierte Rußpartikel aus dem Abgasstrom entfernen. Keramische Partikelfilter bestehen beispielsweise aus einem Wabenkörper mit einer Vielzahl von Kanälen, die jeweils an den gegenüberliegenden Seiten verschlossen sind, sodass das Abgas durch die porösen Keramikwände hindurchströmen muss. Beim Durchströmen lagern sich die Partikel an den Keramikwänden an. Bei zunehmender Beladung steigt der Abgasgegendruck mit der Folge an, dass der Wirkungsgrad des Motors sinkt. Nach Erreichen eines Grenzwertes ist eine Regeneration des Filters erforderlich. Für ein Oxidieren des Kohlenstoffanteils der Partikel werden Temperaturen von mehr als 600° Grad benötigt, die entweder beim Betrieb mit hohen Lasten und Drehzahlen oder durch die Veränderung der Einspritzstrategie zur Anhebung der Abgastemperatur erreicht werden.

Die zukünftige Abgasgesetzgebung stellt hohe Anforderungen an motorische Rohemissionen und an eine Abgasnachbehandlung von Ottomotoren. Mit der Einführung der Euro-6-Abgasnorm wird ein Partikelanzahlgrenzwert vorgeschrieben. Dies kann dazu führen, dass in einigen Fahrzeugmodellen ein Einsatz eines Ottopartikelfilters (OPF) notwendig sein wird. Ottopartikelfilter filtern vornehmlich Rußpartikel. Weiterhin werden jedoch auch sekundäre Substanzen, die sogenannten Aschepartikel gefiltert. Aschepartikelfilter können nicht durch eine Oxidation entfernt werden und verbleiben somit im Ottopartikelfilter. Asche entsteht durch die Verbrennung anorganischer Substanzen. In einem frischen Ottopartikelfilter sind anfangs keine Aschepartikel eingelagert. Werden nun Rußpartikel eingelagert, so steigt der Differenzdruck des Partikelfilters an. Die Rußpartikelfilter sind mit einem Durchmesser von typischerweise um die 70 Nanometer um den Faktor ca. 300 kleiner als die Poren der filternden Substratwand. Aus diesem Grund können die Partikel in die Substratwand eintreten und zu einem Tiefenfiltrationseffekt führen. Dieser Effekt geht mit einer großen Steigerung des Differenzdrucks einher. Nach einer gewissen Laufzeit befindet sich Asche im Partikelfilter. Die Größe dieser Aschepartikel liegt im Bereich Mikrometer, wodurch die Aschepartikel nicht in die Substratwand eintreten, sondern die Aschepartikel lagern sich auf der Substratwand ab.

Aus der gattungsbildenden EP 2 488 734 B1 ist ein Verfahren zum Betreiben eines zur Ausfilterung von im Abgas eines Verbrennungsmotors enthaltenen Partikeln vorgesehenen Partikelfilters bekannt. Der Verbrennungsmotor kann ein direkteinspritzender Ottomotor oder ein direkteinspritzender Dieselmotor sein. Das Abgas des Verbrennungsmotors wird über eine Abgasleitung dem in einem Gehäuse eingebauten Partikelfilter zugeführt, welcher Bestandteil einer Abgasanlage des Verbrennungsmotors ist. Der Partikelfilter ist als sogenannter Wall-Flow-Partikelfilter ausgebildet. Die entsprechenden Strömungskanäle verlaufen parallel zueinander, wobei benachbarte Strömungskanäle durch poröse, gasdurchlässige Wände voneinander getrennt sind. Die Dicke der Wände liegt bevorzugt im Bereich von 0,2 bis 0,4mm. Die Porosität liegt zwischen 30% und 70%, wobei eine mittlere Porengröße zwischen 1µm und 50µm bevorzugt ist. Das Verfahren wird vorteilhaft bei Partikelfiltern mit einer Porengröße der Wände im Mittel von 20 µm und weniger und mit einer Porosität von mehr als 40% durchgeführt. Der Partikelfilter kann in Wabenkammerbauform oder als Sintermetallfilter ausgebildet sein. Die im Wesentlichen als Rußpartikel im Abgas vorliegenden Partikel werden aufgrund eines Oberflächen- und/oder Tiefenfiltrationseffekt ausgefiltert und sammeln sich mit der Zeit im Partikelfilter an. Dadurch steigt der Strömungswiderstand des Partikelfilters in unerwünschter Weise an, weshalb die angesammelten Rußpartikel von Zeit zu Zeit durch einen Regenerationsvorgang entfernt werden müssen. Der Abscheidegrad ist nicht konstant, sondern erhöht sich allmählich bei einem neuen Partikelfilter zu Beginn seiner Gebrauchszeit. Es wird daher bei einem Neuzustand des Partikelfilters zunächst ein Konditionierschritt derart durchgeführt, dass der Abscheidegrad des Partikelfilters für Partikel gegenüber dem im Neuzustand vorhandenen Wert erhöht wird. Der Konditionierschritt wird bei einem neuen, einsatzbereiten Partikelfilter vor dessen bestimmungsgemäßen Gebrauch vorgenommen. Vor Durchführung des Konditionierschrittes ist der Fertigungsprozess für den Partikelfilter abgeschlossen und der Partikelfilter liegt bereit für seinen Einsatz im Fahrzeug zur Ausfilterung von Partikeln. Gleichwohl kann sich der Konditionierschritt vor Inbetriebnahme des Partikelfilters an den Fertigungsprozess anschließen. Als Neuzustand soll auch ein Zustand verstanden werden, in welchem der Partikelfilter nach Abschluss eines Reinigungsprozesses zur Entfernung von sich im Laufe einer längeren Gebrauchszeit angesammelten Ablagerungen vorliegt. Die angegebenen Abgase weisen einen motor- und/oder betriebspunktabhängigen Partikelgrad von typischerweise 0,1g bis 3g je Kilometer Fahrstrecke beziehungsweise etwa 1mg bis 100mg je Kubikmeter Abgas auf. Dabei weisen die Rußpartikel typischerweise einen mittleren aerodynamischen Durchmesser von 50nm bis 120nm auf. Bei dem Partikelfilter handelt es sich insbesondere um einen Dieselpartikelfilter. Der Konditionierschritt umfasst ein Durchleiten von partikelhaltigem Gas durch den Partikelfilter derart, dass wenigstens ein Teil der im Gas enthaltenen Partikel vom Partikelfilter ausgefiltert und im Partikelfilter gespeichert wird. Bevorzugt weist das partikelhaltige Gas im Wesentlichen Partikel in einer Größenverteilung auf, wie sie auch beim bestimmungsgemäßen Gebrauch des Partikelfilters zur Filterung von Motorabgas anzutreffen sind. Dabei ist vorgesehen, dass der Partikelfilter mit einem Gas beaufschlagt wird, welches einen gegenüber dem im normalen Betrieb anzutreffenden Wert erhöhten Partikelgehalt aufweist. Der Partikelfilter wird somit bei Durchführung der Konditionierung in einer partikelreichen Sonderbetriebsart betrieben. Bei Durchführung des Konditionierschrittes wird der Verbrennungsmotor wenigstens zeitweise derart betrieben, dass das vom Verbrennungsmotor abgegebene Abgas ein im Vergleich zum normalen Betrieb erhöhten Partikelgehalt aufweist. Bevorzugt ist der Partikelgehalt des Abgases etwa um den Faktor 1,1 bis 10, bevorzugt um in Faktor 1,5 bis 5 gegenüber dem normalen Betrieb erhöht. Das vom Verbrennungsmotor abgegebene Abgas weist dabei einen Partikelgehalt von mehr als 0,01g je Kubikmeter oder eine Partikelanzahl von mehr als 5x10⁷ je Kubikzentimeter Abgas auf. Damit soll der Konditionierschritt in vergleichsweise kurzer Zeit durchgeführt und abgeschlossen werden. Der Einspritzbeginn einer Kraftstoffhaupteinspritzung wird bevorzugt um etwa 10 Grad Kurbelwinkel später verlegt. Die Abgasrückführrate wird bevorzugt um mehr als 1% insbesondere um mehr als 5% erhöht. Zur Erhöhung des Partikelgehaltes wird eine Ladedruckabsenkung um bevorzugt mehr als 5% gegenüber dem normalerweise eingestellten Wert vorgenommen. Weiterhin können lediglich für die Durchführung des Konditionierschrittes partikelbildende Zusätze dem Kraftstoff und/ oder dem Motoröl zugesetzt sein. Ferner wird vorgeschlagen, zur Durchführung des Konditionierschrittes den Partikelfilter an eine externe Konditioniervorrichtung anzuschließen. Zur Durchführung dieses Konditionierschrittes wird der Partikelfilter beispielsweise an einen Flüssig-, Gas- oder Feststoffbrenner oder an einem Rußgenerator oder an einen Partikelgenerator angeschlossen, welcher ein entsprechend gewünschtes Größenspektrum von Partikeln erzeugt. Damit steht bei Auslieferung des Fahrzeugs oder nach Einbau eines gereinigten bzw. getauschten Partikelfilters ein Partikelfilter zur Verfügung, welcher sofort über einen stabil hohen Partikelabscheidegrad verfügt. Es kann jedoch auf den Einsatz von wieder aus dem Partikelfilter entfernbaren Partikeln verzichtet werden, wenn diese so gewählt werden, dass sie den normalen Betrieb des Partikelfilters durch ihre bleibende Anwesenheit im Partikelfilter nicht beeinträchtigt. Die Partikel können aus Feststoffen eines oder mehrerer der Elemente C, H, AI, Sl, Ti, Fe, Cu, Pt, Pd, Ce, S, O, N, P, Zn, Ca, Na, Li, Ba, Cl, Ra, F gebildet sein.

Das im gattungsbildenden Stand der Technik beschriebene Verfahren hat den Nachteil, dass nun zunächst Rußpartikel eingelagert werden, so dass der Differenzdruck des Partikelfilters steigt.

US 2010/0266461 A1 beschreibt ein Verfahren zum Erzeugen und Aufbringen von Beschichtungen auf Filter mit porösem Material, um große Druckabfallerhöhungen zu reduzieren, wenn sich Material in einem Filter ansammelt, sowie der Filter einen reduzierten und/oder gleichmäßigeren Druckabfall aufweist.

US 2016/0123201 A1 offenbart ein Motorsystem beinhaltend einen elektronisch gesteuerten Selbstzündungsmotor, der konfiguriert ist, um Dieselkraftstoff und ein Öl mit hohem Aschegehalt zu verbrennen, um ein Abgas mit einem kontrollierten Niveau von Ascheablagerungen auf dem Partikelfilter des Systems zu erzeugen.

In US 2010/0126145 A1 wird ein Verfahren zum Regenerieren eines Partikelfilters beschrieben, bei dem eine erste geschätzte Rußbeladung eines Partikelfilters basierend auf einem Druckabfall eines durch den Partikelfilter strömenden Abgases und eine zweite geschätzte Rußbeladung basierend auf einer Massenbilanz von Ruß im Partikelfilter herangezogen wird.

US 2015/0047320 A1 offenbart ein Verfahren zur Bestimmung der Alterung eines SCRF-Katalysators eines Abgasbehandlungssystems, bei dem unter anderem eine Schätzung eines Aschevolumens, die sich im SCRF ansammelt, vorgenommen wird..

Der Erfindung liegt daher die Aufgabe zugrunde, das Verfahren derart auszugestalten und weiterzubilden, so dass eine Steigerung des Differenzdruckes zumindest vermindert ist.

Diese der Erfindung zugrunde liegende Aufgabe wird nun durch ein Verfahren mit den Merkmalen des Patentanspruches 1 gelöst.

Während des Konditionierschrittes wird der Ottopartikelfilter mit Aschepartikeln beladen, wobei ein Tiefenfiltrationseffekt von Rußpartikeln durch eine Ablagerung von Aschepartikeln auf der Substratwand vermindert wird. Die Aschepartikel weisen eine Größe im Bereich Mikrometer auf. In Folge ihrer Größe und ihrer mechanischen Trägheit bei der Abscheidung treten diese nicht in die Substratwand ein, sondern lagern sich auf der Substratwand ab. Die nach dem Konditionierschritt gefilterten, sehr viel kleineren Rußpartikel treten nun nicht mehr in die Substratwand ein, sondern lagern sich auf der Ascheschicht und damit auf der Substratwand ab. Diese Ascheschicht hat eine filternde Wirkung, wobei die Filtrationseffizienz sukzessive ansteigt und der resultierende Differenzdruck geringer ist als bei einer ausschließlichen Einlagerung von Rußpartikeln in der Substratwand.

Der Ottopartikelfilter ist erfindungsgemäß mit einer Washcoatbeschichtung versehen. Es kann insbesondere ein Ottopartikelfilter mit einer Edelmetallbeschichtung verwendet werden. Diese Beschichtung wird während des Fertigungsprozess auf der Substratwand aufgebracht. Diese Ausgestaltungen haben den Vorteil, dass der Ottopartikelfilter die Funktion eines Drei-Wege-Katalysators erfüllen kann.

Vor Durchführung des Konditionierschrittes ist der Fertigungsprozess für den Partikelfilter abgeschlossen. Der Partikelfilter ist während des Konditionierschritts vorzugsweise im Fahrzeug montiert zur Ausfilterung von Partikeln. Der Ottopartikelfilter wird insbesondere im montierten Zustand als Teil der Abgasanlage mit Asche beladen. Alternativ kann der Konditionierschritt vor dem Einbau des Partikelfilters im Anschluss an den Fertigungsprozess erfolgen.

Während des Konditionierschrittes wird der Ottopartikelfilter mit mindestens 5 g und maximal 20 g beladen.

Beispielsweise kann der Ottopartikelfilter auch mit 10g Asche beladen werden. Hierdurch bildet sich eine hinreichende Ascheschicht auf der Substratwand, die den Tiefenfiltrationseffekt von Rußpartikeln vermindert, insbesondere unterbindet. Dass nicht mehr als 20 g Asche verwendet wird, hat den Vorteil, dass das Sauerstoffspeicherverhalten und sowie das Konvertierungsverhalten bezüglich gasförmiger Emissionen des beschichteten Ottopartikelfilters im Wesentlichen nicht leidet.

Es gibt nun mehrere Möglichkeiten, den Ottopartikelfilter mit Asche zu beladen und eine entsprechende Ascheschicht auf der Substratwand herzustellen.

Das Motoröl stellt eine primäre Aschequelle dar. Der Verbrennungsmotor kann in dem Konditionierschritt mit einem Motoröl mit mehr als 1 Gewichtsprozent Aschegehalt, insbesondere mit mehr als 1,2 Gewichtsprozent bspw. 2 Gewichtsprozent Aschegehalt betrieben werden.

Ferner ist es denkbar, hochadditive Motoröle zu verwenden. Beispielsweise können Motoröle mit größeren Mengen an Additiven aus Calcium, Phosphor und Zink verwendet werden. Das Motoröl kann Calcium zu einem Anteil von mehr als 2500 ppm, insbesondere von ca. 3000ppm aufweisen. Das Motoröl kann Phosphor zu einem Anteil von mehr als 1000 ppm, insbesondere von ca. 6000pm aufweisen. Das Motoröl kann einen Zinkanteil von mehr als 1100ppm, insbesondere von 6500ppm enthalten.

Alternativ kann die Asche nicht über das Motoröl, sondern über den Kraftstoff in den Ottopartikelfilter eingebracht werden. Während des Konditionierschrittes kann ein Kraftstoff mit einem aschehaltigen Additiv verwendet werden. Ein Vorteil besteht darin, dass im Vergleich zum Einbringen der Asche über das Motoröl, die Asche bereits über die erste Kraftstofffüllung somit relativ schnell eingelagert werden kann. Über das Motoröl eingebrachte Asche bedingt eine langsamere Ascheeinlagerung infolge des geringeren Motorölverbrauchs. Die Verwendung eines aschehaltigen Motoröls hat jedoch den Vorteil gegenüber der Verwendung eines aschehaltigen Kraftstoffes, dass weniger Ablagerungen im Brennraum, beispielsweise an den Injektoren, Ventilen oder Kolben entstehen und daraus keine Nachteile bezüglich des Brennverfahrens entstehen.

Wenn während des Konditionierschrittes ein Kraftstoff mit einem Motoröladditiv verwendet wird, weist das Gemisch Kraftstoff und insbesondere mehr als 0,5 Gewichtsprozent und vorzugsweise weniger als 2 Gewichtsprozent eines Motoröladditives auf. Während des Konditionierschrittes wird vorzugsweise ein Kraftstoff mit dem Motoröladditiv ZDDP (Zink-Dialkyl-Dithiophosphat) verwendet.

Die Aufgabe wird ferner durch einen Ottopartikelfilter gelöst, der gemäß dem erfindungsgemäßen Verfahren betrieben wird oder betrieben worden ist.

Die eingangs genannten Nachteilen sind daher vermieden entsprechende Vorteile sind erzielt.

Es gibt nun eine Vielzahl von Möglichkeiten, das erfindungsgemäße Verfahren auszugestalten und weiterzubilden. Hierfür darf zunächst auf die dem Patentanspruch 1 nachgeordneten Patentansprüche verwiesen werden. Im Folgenden werden unterschiedliche Ausgestaltungen der Erfindung anhand der Zeichnung und der dazugehörigen Beschreibung erläutert. In der Zeichnung zeigt:

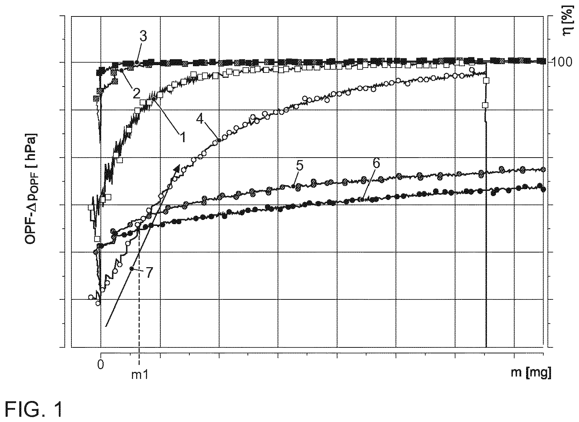

- Fig. 1: in einem schematischen Diagramm für drei verschiedene Aschewerte jeweils den Differenzdruck und die Filtrationseffizienz aufgetragen über der kumulierten Partikelmasse.

Anhand der Fig. 1 darf nun ein Verfahren zum Betreiben eines zur Ausfilterung von im Abgas eines Ottomotors enthaltenen Partikeln vorhandenen Ottopartikelfilters näher beschrieben werden. In Fig. 1 sind zwei Y-Achsen, nämlich links die Achse ΔP_{OPF} mit dem Differenzdruck und Rechts die Achse η mit der Filtrationseffizienz dargestellt. Die X-Achse entspricht der kumulierten Partikelmasse, d.h. der gesamte Masse der im Ottopartikelfilter angesammelten Partikel.

In einem Anfangszustand des Ottopartikelfilters, nämlich zu einem frühen Zeitpunkt im Lebenszyklus des Ottopartikelfilters wird nun ein Konditionierschritt durchgeführt. Der Ottopartikelfilter ist dabei vorzugsweise im Kraftfahrzeug eingebaut, jedoch ist das Fahrzeug noch nicht viele Kilometer gefahren. Vorzugsweise beträgt die Laufleistung weniger als 100 km, wenn mit dem Konditionierschritt begonnen wird. Das Verfahren wird insbesondere durchgeführt, solange die erste Kraftstofffüllung verbraucht wird.

Die eingangs genannten Nachteile sind dadurch vermieden, dass während des Konditionierschrittes des Ottopartikelfilters dieser mit Aschepartikeln beladen wird, wobei ein Tiefenfiltrationseffekt von Rußpartikeln durch eine Ablagerung von Aschepartikeln auf der Substratwand vermindert wird.

In Fig.1 sind drei Kurven 1, 2, 3 dargestellt, die die Filtrationseffizienz zeigen und über der kummulierten Partikelmasse im Ottopartikelfilter aufgetragen sind. Die Filtrationseffizienz 1 ist dabei einem Ottopartikelfilter ohne die Durchführung eines Konditionierschrittes zugeordnet, das heißt es ist keine bzw. 0 g Asche vorab eingelagert worden.

Die Filtrationseffizienz 2 ergibt sich dadurch, dass während des anfänglichen Konditionierschrittes ca. 10g - hier 9,9g Asche - zum Beladen des Ottopartikelfilters verwendet worden sind. Die Filtrationseffizienz 3 zeichnet sich dadurch aus, dass während des Konditionierschrittes 19,6g Asche verwendet worden ist.

Gut zu erkennen ist, dass durch den Konditionierschritt mit steigender Beladung mit Asche die Filtrationseffizienz zu Beginn stark ansteigt und schließlich bis auf den Maximalwert in Höhe von 100% ansteigt. Durch den Konditionierschritt kann die Filtrationseffizienz somit gesteigert werden.

In Fig.1 sind ferner drei Differenzdrücke 4, 5, 6 aufgetragen. Der Differenzdruck 4 stellt sich ein ohne die Durchführung eines Konditionierschritts, das heißt ohne Beladung mit zusätzlicher Asche zu Beginn des Lebenszyklus. Der Differenzdruck 5 stellt sich ein, wenn im Konditionierschritt eine Beladung mit Asche von ca. 10g hier 9,9g Asche erfolgt. Der Differenzdruck 6 stellt sich ein, wenn im Konditionierschritt eine Beladung mit Asche von ca. 20g hier 19,6g Asche erfolgt. Es ist gut zu erkennen, dass der Differenzdruck 4 anfänglich ohne Durchführung eines vorherigen Konditionierschrittes geringer ist als die Differenzdrücke 5 und 6, wobei hier jeweils eine Konditionierung mit 9,9 bzw. 19,6g Asche durchgeführt worden ist. Dieser Differenzdrucknachteil besteht nur bis zu einer relativ geringen kumulierten Partikelmassengrenze m1. Diese kumulierte Partikelmassengrenze beträgt insbesondere weniger als 25mg. Bei höheren kumulierten Partikelmassen, wenn die kumulierte Partikelmasse größer als m1 ist, ergibt sich ein Differenzdruckvorteil, dadurch dass aufgrund des Tiefenfiltrationseffekts der Differenzdruck 4 ohne Konditionierschritt sehr stark ansteigt und die Differenzdrücke 5, 6 mit Konditionierschritt nur langsam steigen.

Dieser Tiefenfiltrationseffekt ist in der Fig. 1 durch einen Pfeil 7 angedeutet. Nachdem der Tiefenfiltrationseffekt endet, wird der Druckanstieg des Differenzdruckes 4 flacher. Gut zu erkennen ist, dass sich ein Differenzdruckvorteil ab der Partikelmasse m1 ergibt, da durch die Ascheschicht auf der Substratwand kein Tiefenfiltrationseffekt auftritt und somit der Druckanstieg der Differenzdrucke 5 und 6 sehr viel flacher ist als der Druckanstieg des Differenzdruckes 4 ohne Konditionierschritt.

### BEZUGSZEICHENLISTE

- 1: Filtrationseffizienz bei Beladung mit 0g Asche
- 2: Filtrationseffizienz bei Beladung mit 9,9g Asche
- 3: Filtrationseffizienz bei Beladung mit 19,6g Asche
- 4: Differenzdruck bei Beladung mit 0,0g Asche
- 5: Differenzdruck bei Beladung mit 9,9g Asche
- 6: Differenzdruck bei Beladung mit 19,6g Asche
- 7: Tiefenfiltrationseffekt
- m1: Partikelmassengrenze
- ΔP_{OPF}: Achse Differenzdruck
- η: Achse Filtrationseffizienz

## Patentansprüche

1. Verfahren zum Betreiben eines Ottopartikelfilters zur Ausfilterung von im Abgas eines Ottomotors enthaltenen Partikeln, wobei in einem Anfangszustand des Ottopartikelfilters ein Konditionierschritt, bei dem der Ottopartikelfilter mit Aschepartikeln beladen wird, durchgeführt wird, **dadurch gekennzeichnet, dass** ein Ottopartikelfilter mit einer Washcoatbeschichtung verwendet wird, wobei ein Tiefenfiltrationseffekt (7) von Rußpartikeln durch eine Ablagerung der Aschepartikel auf der auf einer Substratwand aufgebrachten Washcoatbeschichtung vermindert wird, und dass während des Konditionierschrittes der Ottopartikelfilter mit mehr als 5 g Asche und mit nicht mehr als 20 g Asche beladen wird.

2. Verfahren nach Anspruch 1, **dadurch gekennzeichnet, dass** der Verbrennungsmotor mit Motoröl mit mehr als 1 Gewichtsprozent Aschegehalt betrieben wird.

3. Verfahren nach Anspruch 2, **dadurch gekennzeichnet, dass** das Motoröl Calcium, Phosphor und/oder Zink enthält.

4. Verfahren nach Anspruch 2, **dadurch gekennzeichnet, dass** das Motoröl mehr als 1000 ppm Phosphor enthält.

5. Verfahren nach Anspruch 2, **dadurch gekennzeichnet, dass** das Motoröl mehr als 1100 ppm Zink enthält.

6. Verfahren nach Anspruch 1, **dadurch gekennzeichnet, dass** während des Konditionierschrittes ein Kraftstoff mit einem aschehaltigen Additiv verwendet wird.

7. Verfahren nach Anspruch 1, **dadurch gekennzeichnet, dass** in dem Konditionierschritt ein Kraftstoff mit einem Motoröladditiv verwendet wird.

8. Verfahren nach Anspruch 1, **dadurch gekennzeichnet, dass** ein Gemisch mit Kraftstoff und mit mehr als 0,5 Gewichtsprozent und/oder weniger als 2 Gewichtsprozent Motoröladditiv verwendet wird.

9. Verfahren nach Anspruch 1, **dadurch gekennzeichnet, dass** während des Konditionierschrittes ein Kraftstoff mit dem Motoröladditiv ZDDP (Zink-Dialkyl-Dithiophosphat) verwendet wird.

10. Verfahren nach Anspruch 1, **dadurch gekennzeichnet, dass** ein Ottopartikelfilter mit einer Edelmetallbeschichtung verwendet wird.

## Claims

1. A method for operating a gasoline particulate filter for filtering out particles contained in the exhaust gas of a gasoline engine, in an initial state of the gasoline particulate filter, a conditioning step in which the gasoline particulate filter is loaded with ash particles being carried out, **characterized in that** a gasoline particulate filter comprising a washcoat coating is used, a depth filtration effect (7) of soot particles being reduced by a deposition of the ash particles on the washcoat coating applied to a substrate wall, and that the gasoline particulate filter is loaded with more than 5 g ash and with no more than 20 g ash during the conditioning step.

2. The method according to claim 1, **characterized in that** the internal combustion engine is operated with engine oil having an ash content of more than 1 wt%.

3. The method according to claim 2, **characterized in that** the engine oil contains calcium, phosphorus, and/or zinc.

4. The method according to claim 2, **characterized in that** the engine oil contains more than 1,000 ppm phosphorus.

5. The method according to claim 2, **characterized in that** the engine oil contains more than 1,100 ppm zinc.

6. The method according to claim 1, **characterized in that** a fuel comprising an ash-containing additive is used during the conditioning step.

7. The method according to claim 1, **characterized in that** a fuel comprising an engine oil additive is used in the conditioning step.

8. Method according to claim 1, **characterized in that** a mixture with fuel and with more than 0.5 wt% and/or less than 2 wt% of engine oil additive is used.

9. The method according to claim 1, **characterized in that** a fuel with the engine oil additive ZDDP (zinc dialkyl dithiophosphate) is used during the conditioning step.

10. The method according to claim 1, **characterized in that** a gasoline particulate filter comprising a precious metal coating is used.

## Revendications

1. Procédé pour faire fonctionner un filtre à particules d'essence pour la filtration de particules contenues dans les gaz d'échappement d'un moteur à allumage commandé, dans lequel, dans un état initial du filtre à particules d'essence, une étape de conditionnement, dans laquelle le filtre à particules d'essence est chargé de particules de cendres, est effectuée, **caractérisé en ce qu'**un filtre à particules d'essence comprenant un revêtement réactif est utilisé, dans lequel un effet de filtration en profondeur (7) de particules de suie est évité par un dépôt des particules de cendres sur le revêtement réactif appliqué sur une paroi de substrat et **en ce que** durant l'étape de conditionnement le filtre à particules d'essence est chargé avec plus de 5 g de cendres et avec au plus 20 g de cendres.

2. Procédé selon la revendication 1, **caractérisé en ce que** le moteur à combustion fonctionne avec de l'huile moteur ayant une teneur en cendres supérieure à 1 pour cent en poids.

3. Procédé selon la revendication 2, **caractérisé en ce que** l'huile moteur contient du calcium, du phosphore et/ou du zinc.

4. Procédé selon la revendication 2, **caractérisé en ce que** l'huile moteur contient plus de 1000 ppm de phosphore.

5. Procédé selon la revendication 2, **caractérisé en ce que** l'huile moteur contient plus de 1100 ppm de zinc.

6. Procédé selon la revendication 1, **caractérisé en ce que,** durant l'étape de conditionnement, un carburant comprenant un additif contenant des cendres est utilisé.

7. Procédé selon la revendication 1, **caractérisé en ce que,** dans l'étape de conditionnement, un carburant comprenant un additif d'huile moteur est utilisé.

8. Procédé selon la revendication 1, **caractérisé en ce qu'**un mélange comprenant du carburant et comprenant plus de 0,5 pour cent en poids et/ou moins de 2 pour cent en poids d'additif d'huile moteur est utilisé.

9. Procédé selon la revendication 1, **caractérisé en ce que,** durant l'étape de conditionnement, un carburant comprenant l'additif d'huile moteur ZDDP (dialkyldithiophosphate de zinc) est utilisé.

10. Procédé selon la revendication 1, **caractérisé en ce qu'**un filtre à particules d'essence comprenant un revêtement de métal précieux est utilisé.
